(19)

Europäisches
Patentamt
European
Patent Office
Office européen
des brevets

(11) **EP 2 960 708 A1**

(12) **EUROPEAN PATENT APPLICATION**
published in accordance with Art. 153(4) EPC

(43) Date of publication:
**30.12.2015 Bulletin 2015/53**

(21) Application number: **13875881.8**

(22) Date of filing: **20.02.2013**

(51) Int Cl.:
**G02B 26/10** (2006.01)

(86) International application number:
**PCT/JP2013/054182**

(87) International publication number:
**WO 2014/128864 (28.08.2014 Gazette 2014/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Pioneer Corporation
Kawasaki-shi, Kanagawa 212-0031 (JP)**

(72) Inventor: **HANADA, Yoshihiro
Kawasaki-shi
Kanagawa 212-0031 (JP)**

(74) Representative: **Viering, Jentschura & Partner
mbB
Patent- und Rechtsanwälte
Am Brauhaus 8
01099 Dresden (DE)**

(54) **TWO-DIMENSIONAL OPTICAL SCANNING DEVICE**

(57)    A two-dimensional optical scanning apparatus is provided with: a driving device (10) configured to perform optical scanning by driving a mirror (10), which reflects a light beam emitted from a light source (21), in each of a main scanning direction and a sub scanning direction, which crosses the main scanning direction; and a drive signal generating device (100) configured to generate a first drive signal for the driving device to drive the mirror in the main scanning direction, and a second drive signal for the driving device to drive the mirror in the sub scanning direction. The drive signal generating device generates the second drive signal such that drive amplitude associated with the second drive signal in one of a plurality of frame periods is offset against drive amplitude associated with the second drive signal in another frame period out of the plurality of frame periods.

FIG. 2A
ROM OUTPUT WAVEFORM

FIG. 2B
OFFSET AMOUNT

Of2
Of1

FIG. 2C
DRIVE WAVEFORM

OFFSET OF ONE LINE

FIRST FRAME   SECOND FRAME   THIRD FRAME   FOURTH FRAME

VERTICAL EFFECTIVE PERIOD

VERTICAL BLANKING PERIOD

TIME

EP 2 960 708 A1

## Description

Technical Field

The present invention relates to a two-dimensional optical scanning apparatus configured to generate a projection image, for example, by driving a mirror, which reflects laser light, in each of a horizontal direction and a vertical direction.

Background Art

In this type of apparatus, the mirror such as, for example, a micro electro mechanical systems (MEMS) mirror, which is irradiated with laser light, is driven in each of the horizontal direction and the vertical direction. In this case, resolution of the projection image can be improved with increasing horizontal resonance frequency associated with horizontal scanning.

On the other hand, there are various technical problems when the horizontal resonance frequency is increased. Thus, on the two-dimensional optical scanning apparatus, a scanning direction associated with the horizontal direction is reversed for each one line in many cases so as to obtain a relatively high-resolution projection image even if the horizontal resonance frequency is relatively low. A displacement of the "one line" means a d displacement in the vertical direction during a half period of time of the scanning associated with the horizontal direction.

If, however, the scanning direction associated with the horizontal direction is reversed for each one line, for example, a scanning line interval in a central portion of the projection image and a scanning line interval in an end portion of the projection image are different (i.e. there is density unevenness of scanning lines), which is technically problematic.

With regard to this technical problem, for example, there is proposed an apparatus configured to offset a phase of a vertical drive waveform associated with a vertical drive signal for driving the mirror in the vertical direction, against a phase of a horizontal drive waveform associated with a horizontal drive signal for driving the mirror in the horizontal direction, thereby suppressing the density unevenness of the scanning lines (refer to Patent Literature 1).

Citation List

Patent Literature

Patent Literature 1: U.S. Patent Application Publication No. 2008/0144150 Specification

Summary of Invention

Technical Problem

However, a blanking period for controlling the phase varies depending on the horizontal resonance frequency, which is influenced by, for example, temperature or the like. Therefore, in the technology described in the Patent Literature 1, in order to maintain an offset amount of the phase at a target value, for example, it is necessary to always measure the horizontal resonance frequency or not to store a time error in each frame. Thus, a control circuit is possibly complicated, which is technically problematic.

In view of the aforementioned problems, it is therefore an object of the present invention to provide a two-dimensional optical scanning apparatus that can relatively easily suppress the density unevenness of the scanning lines.

Solution to Problem

The above object of the present invention can be achieved by a two-dimensional optical scanning apparatus is provided with: a driving device configured to perform optical scanning by driving a mirror, which reflects a light beam emitted from a light source, in each of a main scanning direction and a sub scanning direction, which crosses the main scanning direction; and a drive signal generating device configured to generate a first drive signal for said driving device to drive the mirror in the main scanning direction, and a second drive signal for said driving device to drive the mirror in the sub scanning direction, wherein said drive signal generating device generates the second drive signal such that drive amplitude associated with the second drive signal in one frame period out of a plurality of frame periods is offset against drive amplitude associated with the second drive signal in another frame period out of the plurality of frame periods.

The operation and other advantages of the present invention will become more apparent from an embodiment and an example explained below.

Brief Description of Drawings

[FIG. 1] FIG. 1 is a block diagram illustrating a configuration of an image generating apparatus according to an example.
[FIG. 2] FIG. 2A to FIG. 2C are diagrams illustrating one example of a vertical drive signal according to the example.
[FIG. 3] FIG. 3 is a conceptual diagram illustrating a concept of an optical scanning locus associated with optical scanning by the image generating apparatus according to the example.
[FIG. 4] FIG. 4 is a conceptual diagram illustrating a concept of an optical scanning locus associated with optical scanning by an image generating apparatus according to a comparative example.

Description of Embodiments

Hereinafter, a two-dimensional optical scanning apparatus according to an embodiment of the present invention will be explained.

The two-dimensional optical scanning apparatus according to an embodiment is provided with a driving device and a drive signal generating device.

The driving device, which is provided with, for example, a memory, a processor, and the like, performs optical scanning by driving a mirror such as, for example, a micro electro mechanical systems (MEMS) mirror, which reflects a light beam emitted from a light source, in each of a main scanning direction and a sub scanning direction. Here, the driving device drives the mirror such that a scanning direction associated with the main scanning direction is reversed for each one line.

The drive signal generating device, which is provided with, for example, a memory, a processor, and the like, generates a first drive signal for the driving device to drive the mirror in the main scanning direction, and a second drive signal for the driving device to drive the mirror in the sub scanning direction. The first drive signal and the second drive signal may be separately supplied to the driving device, or the second drive signal may be superimposed on the first drive signal and then supplied to the driving device. The drive signal is, for example, a sinusoidal signal. On the other hand, the second drive signal is, for example, a sawtooth (or ramp wave, sawtooth wave) signal.

Particularly in the embodiment, the second drive signal is generated by the drive signal generating device such that drive amplitude (or drive current or drive voltage) associated with the second drive signal in one of a plurality of frame periods is offset against drive amplitude (or drive current or drive voltage) associated with the second drive signal in another frame period out of the plurality of frame periods.

Here, the second drive signal may be generated by generating a basic signal for the driving device to drive the mirror in the sub scanning direction and an offset to be added to the basic signal and by adding the generated offset to the generated basic signal.

An offset amount between the drive amplitude associated with the second drive signal in the one frame period and the drive amplitude associated with the second drive signal in the another frame period may be, for example, an integral multiple of an amount corresponding to one line associated with the optical scanning. Alternatively, the offset amount may be, for example, an amount in which an interval of a scanning locus in the sub scanning direction in a central portion of a scanning range associated with the optical scanning and an interval of the scanning locus in the sub scanning direction in an end portion of the scanning range are close to each other, in a predetermined period including the one frame period and the another frame period.

As described above, the addition of the offset to the drive amplitude causes, for example, a one-line difference between the scanning locus in the one frame period and the scanning locus in the another frame period. Therefore, the scanning line interval in the central portion of the scanning range and the scanning line interval in the end portion of the scanning range can be brought close to each other.

Particularly in the embodiment, as opposed to the technology described in the Patent Literature 1 described above, the phase of the signal waveform associated with the drive signal is not controlled in order to suppress the density unevenness of the scanning lines, and it is thus unnecessary to perform strict time control. As a result, according to the two-dimensional optical scanning apparatus in the embodiment, the density unevenness of the scanning lines can be suppressed, relatively easily.

If the second drive signal is generated by adding the offset to the basic signal, it is preferable to add, to the basic signal, such an offset that the offset amount is gradually increased from an end of an effective period associated with a frame period immediately before the one frame period, to a start of the one frame period, and that the offset amount is maintained in an effective period associated with the one frame period. Such a confirmation makes it possible to avoid an influence on the drive of the mirror, which is caused, for example, by a high-frequency component, and it is extremely useful in practice.

Example

Hereinafter, a two-dimensional optical scanning apparatus according to an example of the present invention will be explained with reference to the drawings.

(Configuration of Image Generating Apparatus)

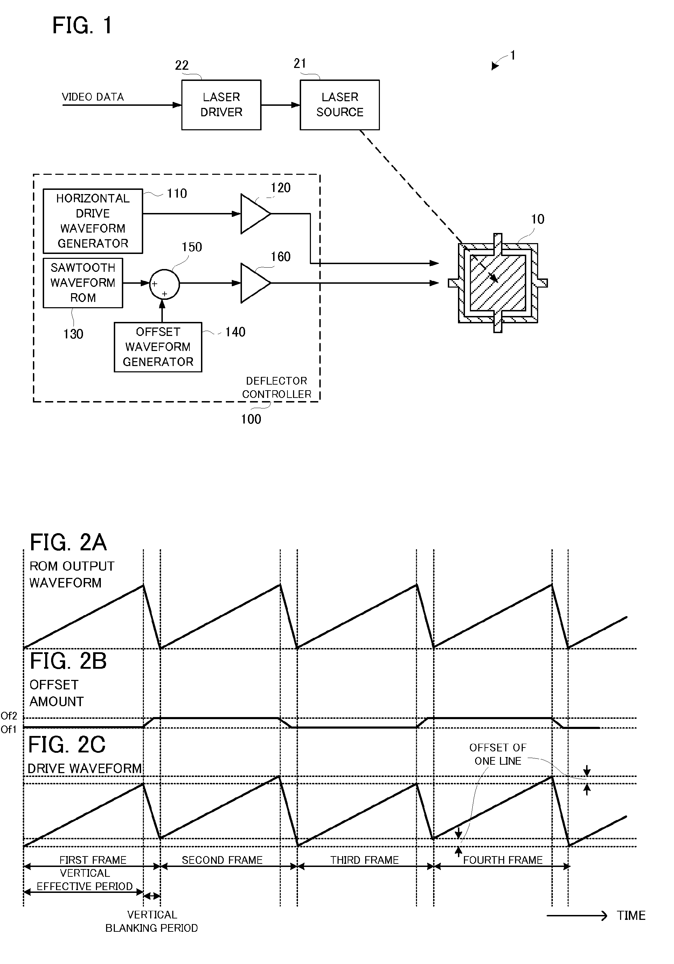

Firstly, a configuration of the image generating apparatus on which the two-dimensional optical scanning apparatus according to the example is mounted will be explained with reference to FIG. 1. FIG. 1 is a block diagram illustrating the configuration of the image generating apparatus according to the example.

In FIG. 1, an image generating apparatus 1 is provided with: a deflector 10 having a MEMS mirror (hereinafter referred to as a "mirror" as occasion demands) and a drive apparatus configured to drive the mirror; a deflector controller 100 configured to control the deflector 10; a laser source 21 configured to emit laser light; and a laser driver 22 configured to control the laser source 21.

The deflector controller 100 is provided with a horizontal drive waveform generator 110 configured to generate a sinusoidal signal horizontal drive signal, a power amplifier 120 configured to amplify the generated horizontal drive signal, a sawtooth waveform ROM 130 configured to generate a sawtooth signal, an offset waveform generator 140 configured to generate an DC offset, an adder 150 configured to add the generated sawtooth signal and the generated DC offset to generate a vertical drive signal, and a power amplifier 160 configured to amplify the generated vertical drive signal.

Here, the sawtooth waveform ROM 130 stores therein one-period data of a sawtooth wave. If one frame period is started, the data stored in the sawtooth waveform ROM 130 is successively read out. At the same time of an end of the one frame period, all the data stored in the sawtooth waveform ROM 130 is read out.

The drive apparatus that constitutes the deflector 10 drives the mirror, according to the horizontal drive signal and the vertical drive signal outputted from the deflector controller 100. More specifically, the drive apparatus applies an electric field to a piezoelectric thin film formed on a substrate of the mirror, according to the horizontal drive signal and the vertical drive signal, thereby driving the mirror. Since various known aspects can be applied to a method of driving the mirror, an explanation of the details of the method will be omitted.

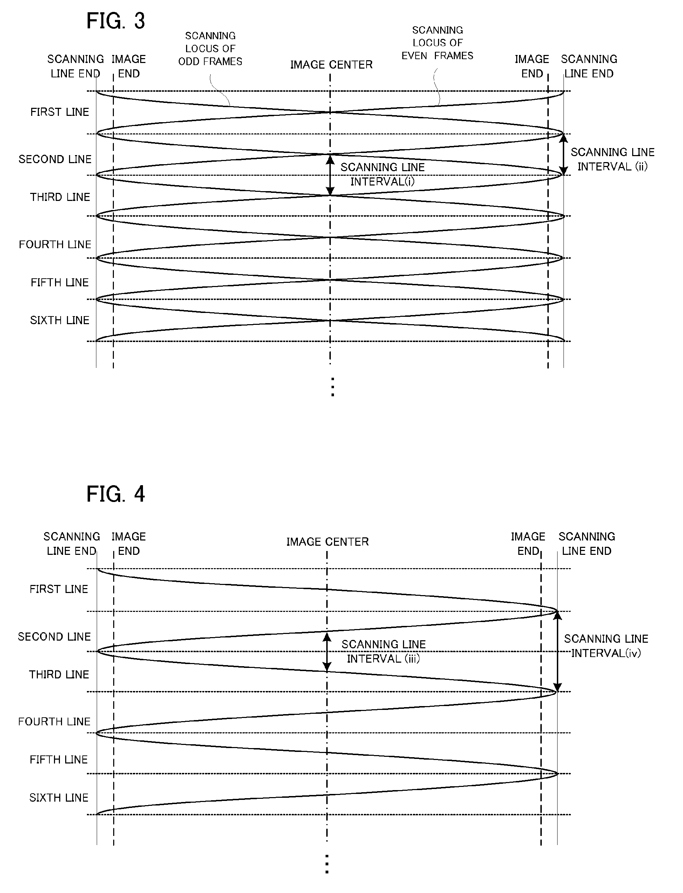

In the example, the horizontal drive signal is a sinusoidal signal, and the vertical drive signal is a sawtooth signal. The deflector 10 is thus driven by resonant vibration in a sinusoidal manner in a horizontal direction, and is driven in a sawtooth manner in a vertical direction. With regard to a scanning locus resulting from the drive of the mirror, a scanning direction associated with the horizontal direction is reversed for each one line (refer to FIG. 3). This results in acquisition of a relatively high-resolution projection image even if horizontal resonance frequency associated with the horizontal drive signal is relatively low.

The "projection image" is an image displayed in a period other than a horizontal blanking period and a vertical blanking period in a scanning range.

(Vertical Drive Signal)

Next, the vertical drive signal according to the example will be explained with reference to FIG. 2A to FIG. 2C and FIG. 3. FIG. 2A to FIG. 2C are diagrams illustrating one example of the vertical drive signal according to the example. A vertical axis in FIG. 2A to FIG. 2C indicates voltage. FIG. 3 is a conceptual diagram illustrating a concept of the scanning locus associated with optical scanning by the image generating apparatus according to the example.

A waveform illustrated in FIG. 2A (refer to "ROM output waveform") is a waveform associated with the sawtooth signal outputted from the sawtooth waveform ROM 130. A waveform illustrated in FIG. 2B (refer to "offset amount") is a waveform associated with the DC offset outputted from the offset waveform generator 140.

A difference between an offset amount Of1 and an offset amount Of2 herein is explained as an amount corresponding to one line after output from the power amplifier 160. The difference between the offset amount Of1 and the offset amount Of2 is not limited to the amount corresponding to the one line after output from the power amplifier 160, but may be an amount in which a vertical interval of the scanning locus in a central portion of a scanning range and a vertical interval of the scanning locus in an end portion of the scanning range are close or equal to each other, as described later, such as, for example, an integral multiple of the amount corresponding to the one line, after output from the power amplifier 160. Moreover, the offset amount Of1 (or Of2) is not limited to "0" but may be a positive value, or a negative value.

As illustrated in FIG. 2B, the offset amount gradually increases, for example, from an end of a vertical effective period associated with a first frame period, to a start of a second frame period. Then, in a vertical effective period associated with the second frame period, the offset amount (or the "offset amount Of2" herein) is maintained. Such a configuration makes it possible to avoid an influence caused by a high-frequency component included in the DC offset when the mirror is driven, and it is extremely useful in practice.

A waveform illustrated in FIG. 2C (refer to "drive waveform") is a waveform associated with the vertical drive signal outputted from the power amplifier 160 after the sawtooth signal and the DC offset are added by the adder 150.

As illustrated in FIG. 2C, the waveform associated with the vertical drive signal monotonically increases during the vertical effective period other than a vertical blanking period (or a vertical retrace period), out of one period associated with vertical scanning (i.e. one frame period). Thus, a drawing point (i.e. coordinates in the projection image generated by the optical scanning) at a time point t can be expressed as follows.

$$y = a \cdot t \text{ (wherein ``a'' is a positive real number)}$$

(wherein "a" is a positive real number)

An interval of horizontal scanning lines adjacent to each other in the end portion of the scanning range is equal to a vertical displacement of a period corresponding to one period associated with horizontal scanning. Specifically, it is assumed that the period corresponding to the one period associated with the horizontal scanning is Th1. Since the period can be expressed as Th1=1/fh (wherein "fh" is horizontal scanning frequency), an interval y1 of the horizontal scanning lines adjacent to each other in the end portion of the scanning range is a • Th1 (or two lines herein).

On the other hand, an interval of horizontal scanning lines adjacent to each other in a central portion of the image (corresponding to the central portion of the scanning range) is equal to a vertical displacement of a period corresponding to a half period associated with the horizontal scanning. Specifically, it is assumed that the period corresponding to the half period associated with the horizontal scanning is Th2. Since the period can be expressed as Th2=1/(2 • fh)=1/(2 • Th1), an interval y2 of the horizontal scanning lines adjacent to each other in the central portion of the image is a • Th2=( a • Th1)/2. In other words, the interval y2 is a half the interval y1 (i.e. one line).

Therefore, if no measures are taken, regarding the scanning locus, for example, as illustrated in FIG. 4, a scanning line interval (iv) at a scanning line end (i.e. in the end portion of the scanning range) is twice a scanning line interval (iii) in the central portion of the image, and that causes density unevenness of the scanning lines. FIG. 4 illustrates an optical scanning locus in two continuous frame periods.

In the example, however, the offset is set ON/OFF in each one frame period (refer to FIG. 2B). Thus, regarding the optical scanning locus by the image generating apparatus 1 according to the example, a scanning line interval (i) in the central portion of the image and a scanning line interval (ii) in the end portion of the scanning range are equal in two continuous frame periods (refer to FIG. 3). As a result, also due to an afterimage effect, a projection image with less density unevenness of the scanning lines is provided to a user of the image generating apparatus 1.

In FIG. 2A to FIG. 2C, the offset is set OFF in an odd frame period, and the offset is set ON in an even frame period; however, for example, the offset may be set ON in the odd frame period, and the offset may be set OFF in the even frame period. Alternatively, for example, the offset may be set ON in two continuous frame periods, and the offset may be set OFF in a frame period following the aforementioned periods.

The "laser source 21", the "deflector controller 100", the "sawtooth waveform ROM 130", and the "offset waveform generator 140" according to the example are respectively one example of the "light source", the "drive signal generating device", the "basic signal generating device", and the "offset generating device" according to the present invention. The "deflector 10" according to the example is one example of the "driving device" and the "mirror" according to the present invention. The "horizontal direction" and the "vertical direction" according to the example are respectively one example of the "main scanning direction" and the "sub scanning direction" according to the present invention.

The present invention is not limited to the aforementioned embodiments and examples, but various changes may be made, if desired, without departing from the essence or spirit of the invention which can be read from the claims and the entire specification. A two-dimensional optical scanning apparatus which involves such changes is also intended to be within the technical scope of the present invention.

Description of Reference Numerals

| | |
|---|---|
| 1 | image generating apparatus |
| 10 | deflector |
| 21 | laser source |
| 22 | laser driver |
| 100 | deflector controller |
| 110 | horizontal drive waveform generator |

| 120, 160 | power amplifier |
| --- | --- |
| 130 | sawtooth waveform ROM |
| 140 | offset waveform generator |
| 150 | adder |

**Claims**

1.  A two-dimensional optical scanning apparatus comprising:

    a driving device configured to perform optical scanning by driving a mirror, which reflects a light beam emitted from a light source, in each of a main scanning direction and a sub scanning direction, which crosses the main scanning direction; and
    a drive signal generating device configured to generate a first drive signal for said driving device to drive the mirror in the main scanning direction, and a second drive signal for said driving device to drive the mirror in the sub scanning direction, wherein
    said drive signal generating device generates the second drive signal such that drive amplitude associated with the second drive signal in one frame period out of a plurality of frame periods is offset against drive amplitude associated with the second drive signal in another frame period out of the plurality of frame periods.

2.  The two-dimensional optical scanning apparatus according to claim 1, wherein
    said drive signal generating device comprises:

    a basic signal generating device configured to generate a basic signal for said driving device to drive the mirror in the sub scanning direction; and
    an offset generating device configured to generate an offset to be added to the generated basic signal, and
    said drive signal generating device adds the generated offset to the generated basic signal, thereby generating the second drive signal.

3.  The two-dimensional optical scanning apparatus according to claim 2, wherein the offset generating device gradually increases an offset amount associated with the offset, from an end of an effective period associated with a frame period immediately before a one frame period, to a start of the one frame period, and maintains the offset amount in an effective period associated with the one frame period.

4.  The two-dimensional optical scanning apparatus according to claim 1, wherein an offset amount between the drive amplitude associated with the second drive signal in the one frame period and the drive amplitude associated with the second drive signal in the another frame period is an integral multiple of an amount corresponding to one line associated with the optical scanning.

5.  The two-dimensional optical scanning apparatus according to claim 1, wherein an offset amount between the drive amplitude associated with the second drive signal in the one frame period and the drive amplitude associated with the second drive signal in the another frame period is an amount in which an interval of a scanning locus in the sub scanning direction in a central portion of a scanning range associated with the optical scanning and an interval of the scanning locus in the sub scanning direction in an end portion of the scanning range are close to each other, in a predetermined period including the one frame period and the another frame period.

6.  The two-dimensional optical scanning apparatus according to claim 1, wherein a scanning direction along the main scanning direction in the optical scanning is reversed for each one line associated with the optical scanning.

7.  The two-dimensional optical scanning apparatus according to claim 1, wherein
    the first drive signal is a sinusoidal signal, and
    the second drive signal is a sawtooth signal.

## FIG. 1

## FIG. 2A
ROM OUTPUT
WAVEFORM

## FIG. 2B
OFFSET
AMOUNT

Of2
Of1

## FIG. 2C
DRIVE WAVEFORM

OFFSET OF
ONE LINE

FIRST FRAME    SECOND FRAME    THIRD FRAME    FOURTH FRAME

VERTICAL
EFFECTIVE PERIOD

VERTICAL
BLANKING PERIOD

TIME

## FIG. 3

## FIG. 4

## INTERNATIONAL SEARCH REPORT

| International application No. |
| --- |
| PCT/JP2013/054182 |

**A. CLASSIFICATION OF SUBJECT MATTER**
*G02B26/10*(2006.01)i

According to International Patent Classification (IPC) or to both national classification and IPC

**B. FIELDS SEARCHED**

Minimum documentation searched (classification system followed by classification symbols)
G02B26/10, B41J2/44, G09G3/02, G09F9/30, G03B21/00, G03B33/00

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)
JSTPlus/JST7580(JDreamII), Science Direct, IEEE Xplore

**C. DOCUMENTS CONSIDERED TO BE RELEVANT**

| Category* | Citation of document, with indication, where appropriate, of the relevant passages | Relevant to claim No. |
| --- | --- | --- |
| A | JP 2008-9074 A (Sony Corp.), 17 January 2008 (17.01.2008), entire text; all drawings (Family: none) | 1-7 |
| A | JP 2000-32291 A (Matsushita Electric Industrial Co., Ltd.), 28 January 2000 (28.01.2000), entire text; all drawings & US 6429899 B1 & EP 1016277 A & WO 2000/004714 A1 | 1-7 |
| A | JP 2005-347816 A (Canon Inc.), 15 December 2005 (15.12.2005), entire text; all drawings (Family: none) | 1-7 |

☒ Further documents are listed in the continuation of Box C.  ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 11 March, 2013 (11.03.13) | 26 March, 2013 (26.03.13) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
| --- |
| PCT/JP2013/054182 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | WO 2011/008386 A1  (Microvision, Inc.),<br>20 January 2011 (20.01.2011),<br>entire text; all drawings<br>& US 2011/0013097 A1    & EP 2454632 A<br>& JP 2012-533769 A | 1-7 |
| A | US 2008/0144150 A1  (Microvision, Inc.),<br>19 January 2008 (19.01.2008),<br>entire text; all drawings<br>& US 2008/0144150 A1    & US 2004/0004585 A1<br>& US 2007/0291051 A1    & US 2009/0213040 A1<br>& US 2011/0069084 A1    & EP 1508242 A<br>& WO 2003/098918 A1 | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   US 20080144150 A